# EUROPEAN PATENT SPECIFICATION

(11) **EP 0 482 524 B1**
(45) Date of publication and mention of the grant of the patent: **30.08.1995**
(21) Application number: 91117824.2
(22) Date of filing: 18.10.1991
(51) Int. Cl.: F16H 47/02, F16H 61/44

(54) **Hydrostatic transmission unit particularly for industrial machines**
Hydrostatisches Getriebe, insbesondere für Nutzfahrzeuge
Transmission hydrostatique en particulier pour véhicules industriels

(30) Priority: 23.10.1990 IT 2184590
(43) Date of publication of application: 29.04.1992
(73) Proprietor: CLARK-HURTH COMPONENTS S.p.A., I-38062 Arco (Trento) (IT)
(72) Inventor: Hurth, Fritz Carl Anton, CH-6426 Montagnola (CH)
(74) Representative: Modiano, Guido, Dr.-Ing.

(56) References cited:
- EP-A- 0 026 115
- EP-A- 0 322 202
- DE-A- 3 907 633
- US-A- 3 421 389

## Description

The present invention relates to a hydrostatic transmission unit particularly for industrial machines.

The German patent DE-3907633 discloses a hydrostatic transmission unit to be used preferably in industrial machines, which substantially has a variable-displacement pump which feeds in parallel two hydrostatic motors, one of which has variable displacement, which are connected to the shaft for transmitting motion to the axles. More precisely, there is a fixed-displacement hydrostatic motor which is connected to the output shaft by means of a first kinematic gear train, which constantly meshes with the shaft, and there is a second variable-displacement hydrostatic motor which needs to reach zero displacement and is connected to the same output shaft by means of a kinematic train on which a clutch is interposed and allows to disconnect said motor from the output shaft.

The described coupling allows to achieve certain conversion factors, but has, for example, the disadvantage that it does not immediately and actually stop the rotation of the variable-displacement motor when the clutch connected thereto is opened.

This solution furthermore requires the use of a hydrostatic motor capable of reaching zero displacement.

The aim of the invention is to improve the above described solution by providing a hydrostatic transmission unit which allows to perform the instantaneous and actual stopping of the variable-displacement motor as soon as the clutch which connects it to the output shaft is opened.

Within the scope of the above described aim, a particular object of the invention is to provide a transmission unit in which it is possible to use any hydrostatic motor, which does not necessarily have to reach zero displacement, thus contributing to a considerable constructive simplification.

Another object of the present invention is to provide a transmission unit which allows to significantly reduce power losses, consequently achieving a very high useful efficiency.

Not least object of the present invention is to provide a transmission unit which, by virtue of its peculiar constructive characteristics, is capable of giving the greatest assurances of reliability and safety in use.

This aim, these objects and others which will become apparent hereinafter are achieved by a hydrostatic transmission unit, particularly for industrial machines, which comprises a variable-displacement hydrostatic pump which drives a first hydrostatic motor and a second hydrostatic motor, at least one of said motors having variable displacement, one of said hydrostatic motors being connected, by means of a kinematic gear train, to an output shaft which is operatively associated with the axles for motion transmission, characterized in that it comprises a clutch interposed on the kinematic train for the connection of said at least one variable-displacement motor to said output shaft and a brake which is operatively associated with said variable-displacement motor.

Further characteristics and advantages will become apparent from the description of a preferred but not exclusive embodiment of a hydrostatic transmission unit particularly for industrial machines, illustrated only by way of non-limitative example with the aid of the accompanying diagram, which illustrates the hydrostatic transmission unit according to the invention.

With reference to the above figure, the hydrostatic transmission unit, particularly for industrial machines, according to the invention, comprises a variable-displacement hydrostatic pump 1 to which a first hydrostatic motor 2 and a second hydrostatic motor 3 are connected in parallel.

Advantageously, the first hydrostatic motor has variable displacement, whereas the second hydrostatic motor 3 can be made either with fixed displacement or with variable displacement, according to the conversion ratios to be obtained.

The second hydrostatic motor 3 is connected, by means of a kinematic train constituted by a first gear 5 and by a second gear 6, to an output shaft 7 which, by means of a conical pinion 8, acts on the axles 9 of the industrial machine.

Said motor 3, as previously mentioned, can be provided by means of any type of hydrostatic motor currently commercially available.

The first hydrostatic motor 2 is connected, by means of a kinematic train which is constituted by a third gear 10 which meshes with a fourth gear 11, to a clutch unit 12 which allows to engage said unit with the output shaft 7.

Furthermore, and this is an important characteristic of the invention, a brake 20 is associated with the variable-displacement hydrostatic motor 2 and allows to immediately stop the rotation of the hydrostatic motor 2 when the clutch is opened.

To the above it should be furthermore added that the pairs of gears allow to vary the dimensions of the motors which are applied and the total obtainable conversion ratio.

The function of the clutch 12 is to allow the connection of the hydrostatic motor 2 to the kinematic train constituted by the third and fourth gear and consequently to the output shaft 8.

In practical operation, in the initial conditions the brake 20 is released, i.e. it does not act on the motor, whereas the clutch is engaged so that the variable-displacement hydrostatic motor, in maximum-displacement conditions, is directly connected to the output shaft 7 by means of the pair of gears described above.

In these conditions, the two motors work by adding their torques proportionally to their displacement, in practice sharing the flow-rate of the pump.

The first step of motion conversion is obtained by adjusting the pump displacement by approximately three times.

The second step is obtained by reducing the displacement of the variable-displacement motor 2 to the minimum constructively possible value, without the actual need to reach zero displacement.

The third step is performed by inserting the brake unit 20, consequently disengaging the clutch, and by returning the pump to the maximum displacement.

In such conditions, only the hydrostatic motor 3, which can have a variable or fixed displacement, absorbs the entire delivered flow-rate of the pump, which is rebalanced according to the displacement of the motor 3.

A further conversion step is possible by further adjusting the displacement of the pump.

In this manner it is possible to achieve extremely high conversion factors, which can reach the ratio of 1:81.

From what has been described above, it can thus be seen that the invention achieves the proposed aim and objects, and in particular the fact is stressed that a transmission unit is provided which, by using a brake unit on the variable-displacement motor, allows to actually stop said motor when the clutch unit is disengaged.

It is furthermore possible to use a second variable-displacement motor, with the advantage of further extending the range of obtainable conversion ratios.

The invention thus conceived is susceptible to numerous modifications and variations, all of which are within the scope of the inventive concept.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

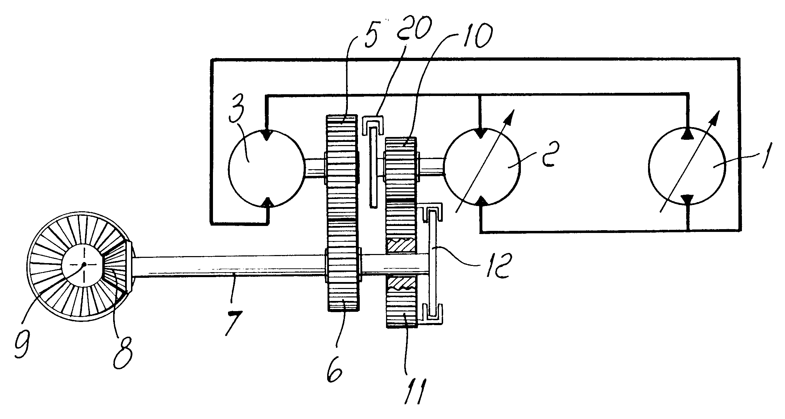

## Claims

1. A hydrostatic transmission unit particularly for industrial machines, comprising:
a variable-displacement hydrostatic pump (1) which drives a first hydrostatic motor (2) and a second hydrostatic motor (3), at least said first hydrostatic motor (2) having a variable displacement, said second hydrostatic motor (3) being connected, by means of a kinematic gear train (5,6,10,11), to an output shaft (7) which is operatively associated with axles (9) for motion transmission; and
a clutch (12) interposed on the kinematic train (5,6,10,11) for the connection of said first hydrostatic motor (2) to said output shaft (7),
characterized in that said first variable displacement hydrostatic motor (2) cannot be varied to zero displacement and in that said unit further comprises a brake (20) which is operatively associated with said first hydrostatic motor (2), such as upon actuation of said brake (20) the delivered flow-rate of the hydrostatic pump (1) is substantially absorbed by said second hydrostatic motor (3).

2. Hydrostatic transmission unit according to claim 1, characterized in that both of said hydrostatic motors (2,3) have variable displacement.

3. Hydrostatic transmission unit according to one or more of the preceding claims, characterized in that it has a transmission ratio of up to 1:81.

4. A method for driving the motion conversion of the hydrostatic transmission unit according to one or more of the preceding claims, characterized in that it includes the steps of:
connecting a first hydrostatic motor (2) having variable displacement, in its maximum displacement condition, by means of a clutch (12), to an output shaft (7), such that said first hydrostatic motor (2) and a second hydrostatic motor (3) substantially share the flow-rate of a hydrostatic pump (1);
adjusting the displacement of said hydrostatic pump (1);
reducing the displacement of said first hydrostatic motor (2) to a minimum constructively possible value, without reaching zero displacement;
applying a brake (20), operatively associated with said first hydrostatic motor (2);
disengaging said clutch (12); and
absorbing the delivered flow-rate of the hydrostatic pump (1) by said second hydrostatic motor (3).

## Patentansprüche

1. Hydrostatisches Getriebe, insbesondere für Nutzfahrzeuge, mit einer hydrostatischen Pumpe (1) mit variabler Verschiebung, welche einen ersten hydrostatischen Motor (2) und einen zweiten hydrostatischen Motor (3) antreibt, wobei wenigstens der erste hydrostatische Motor (2) eine variable Verschiebung aufweist und wobei der zweite hydrostatische Motor (3) mittels einer Zahnradübersetzung (5,6,10,11) mit einer Ausgangswelle (7) verbunden ist, welche mit Achsen (9) zur Bewegungsübertragung operativ verbunden ist; und mit einer Kupplung (12), die zwischen der kinematischen Übersetzung (5,6,10,11) zur Verbindung des ersten hydrostatischen Motors (2) mit der Ausgangswelle (7) angeordnet ist,
dadurch gekennzeichnet,
daß der erste hydrostatische Motor (2) mit variabler Verschiebung nicht auf eine Nullverschiebung variierbar ist, und daß außerdem eine Bremse (20) vorgesehen ist, welche operativ mit dem ersten hydrostatischen Motor (2) verbunden ist, so daß nach Betätigung der Bremse (20) die gelieferte Flußrate der hydrostatischen Pumpe (1) im wesentlichen von dem zweiten hydrostatischen Motor (3) absorbiert wird.

2. Hydrostatisches Getriebe nach Anspruch 1,
dadurch gekennzeichnet,
daß beide hydrostatischen Motoren (2,3) eine variable Verschiebung aufweisen.

3. Hydrostatisches Getriebe nach einem oder mehreren der vorangehenden Ansprüchen,
dadurch gekennzeichnet,
daß es ein Übertragungsverhältnis von bis zu 1:81 aufweist.

4. Verfahren zum Antreiben der Bewegungsumkehr des hydrostatischen Getriebes nach einem oder mehreren der vorangehenden Ansprüche,
dadurch gekennzeichnet,
daß es folgende Schritte aufweist:
Verbinden eines ersten hydrostatischen Motors (2) mit variabler Verschiebung mittels einer Kupplung (12) in seinem maximalen Verschiebungszustand mit einer Ausgangswelle (7), so daß der erste hydrostatische Motor (2) und ein zweiter hydrostatischer Motor (3) sich im wesentlichen die Flußrate einer hydrostatischen Pumpe (1) teilen;
Justieren der Verschiebung der hydrostatischen Pumpe (1);
Verringern der Verschiebung des ersten hydrostatischen Motors (2) auf einen minimalen konstruktiv möglichen Wert, ohne eine Nullverschiebung zu erreichen;
Betätigen einer Bremse (20), die operativ mit dem ersten hydrostatischen Motor (2) verbunden ist;
Außereingriffbringen der Kupplung (12); und
Absorbieren der gelieferten Flußrate der hydrostatischen Pumpe (1) durch den zweiten hydrostatischen Motor (3).

## Revendications

1. Unité de transmission hydrostatique, en particulier pour des machines industrielles, comprenant :
une pompe hydrostatique à cylindrée variable (1) qui entraîne un premier moteur hydrostatique (2) et un deuxième moteur hydrostatique (3), ledit premier moteur hydrostatique (2) au moins ayant une cylindrée variable, ledit deuxième moteur hydrostatique (3) étant raccordé, au moyen d'un train d'engrenages cinématique (5, 6, 10, 11), à un arbre de sortie (7) qui est associé de façon opérationnelle à des axes (9) pour une transmission de mouvement; et
un embrayage (12) interposé sur le train cinématique (5, 6, 10, 11) pour le raccordement dudit premier moteur hydrostatique (2) audit arbre de sortie (7),
caractérisé en ce que l'on ne peut pas faire varier ledit premier moteur hydrostatique à cylindrée variable (2) à partir d'une cylindrée zéro, et en ce que ladite unité comporte de plus un frein (20) qui est associé de façon opérationnelle audit premier moteur hydrostatique (2), de telle sorte que, lors de l'actionnement dudit frein (20), le débit d'écoulement délivré par la pompe hydrostatique (1) soit sensiblement absorbé par ledit deuxième moteur hydrostatique (3).

2. Unité de transmission hydrostatique selon la revendication 1, caractérisée en ce que lesdits deux moteurs hydrostatiques (2, 3) ont des cylindrées variables.

3. Unité de transmission hydrostatique selon l'une ou plusieurs des revendications précédentes, caractérisée en ce qu'elle a un rapport de transmission pouvant aller jusqu'à 1:81.

4. Procédé pour produire la conversion de mouvement de l'unité de transmission hydrostatique selon l'une ou plusieurs des revendications précédentes, caractérisé en ce qu'il comporte les étapes suivantes :
le raccordement d'un premier moteur hydrostatique (2) ayant une cylindrée variable, dans son état de cylindrée maximale, au moyen d'un embrayage (12), à un arbre de sortie (7) de telle sorte que ledit premier moteur hydrostatique (2) et un deuxième moteur hydrostatique (3) se partagent sensiblement le débit d'écoulement d'une pompe hydrostatique (1);
l'ajustage de la cylindrée de ladite pompe hydrostatique (1);
la réduction de la cylindrée dudit premier moteur hydrostatique (2) à une valeur minimale possible du point de vue de la construction, sans atteindre une cylindrée zéro;
l'application d'un frein (20) associé de façon opérationnelle audit premier moteur hydrostatique (2);
le relâchement dudit embrayage (12); et
l'absorption du débit d'écoulement délivré de la pompe hydrostatique (1) par ledit deuxième moteur hydrostatique (3).
